# EUROPÄISCHE PATENTSCHRIFT

(11) **EP 4 121 247 B1**
(45) Veröffentlichungstag und Bekanntmachung des Hinweises auf die Patenterteilung: **01.05.2024**
(21) Anmeldenummer: 21713907.0
(22) Anmeldetag: 17.03.2021
(51) Int. Cl.: B23K 26/38, B23K 37/04, G01B 11/25

(54) **VERFAHREN UND VORRICHTUNG ZUR BESTIMMUNG EINES IST-ZUSTANDS VON AUFLAGELEISTEN EINER WERKSTÜCKAUFLAGE SOWIE WERKZEUGMASCHINE MIT EINER DERARTIGEN VORRICHTUNG**
METHOD AND DEVICE FOR DETERMINING AN ACTUAL STATE OF SUPPORT BARS OF A WORKPIECE SUPPORT, AND MACHINE TOOL HAVING A DEVICE OF THIS TYPE
PROCÉDÉ ET DISPOSITIF POUR DÉTERMINER UN ÉTAT RÉEL DE BARRES DE SUPPORT D'UN SUPPORT DE PIÈCE, ET MACHINE-OUTIL ÉQUIPÉE D'UN TEL DISPOSITIF

(30) Priorität: 17.03.2020 DE 102020107256
(43) Veröffentlichungstag der Anmeldung: 25.01.2023
(73) Patentinhaber: TRUMPF Werkzeugmaschinen SE + Co. KG, 71254 Ditzingen (DE)
(72) Erfinder: KIEFER, Manuel, 74889 Sinsheim (DE); OTTNAD, Jens, 76199 Karlsruhe (DE); POENITZ, Willi, 71229 Leonberg (DE); STRUCKMEIER, Frederick, 71229 Leonberg (DE); TESCHNER, Marc, 70176 Stuttgart (DE)
(74) Vertreter: Trumpf Patentabteilung
(86) Internationale Anmeldenummer: PCT/EP2021/056805
(87) Internationale Veröffentlichungsnummer: WO 2021/185899

(56) Entgegenhaltungen:
- DE-A1-102017 210 182
- DE-B4-102006 036 586
- US-B2- 10 151 583

## Beschreibung

Die Erfindung betrifft ein Verfahren und eine Vorrichtung zur Bestimmung eines Ist-Zustands einer Auflageleiste zur Lagerung eines plattenartigen Werkstücks, insbesondere eines Blechs, an einer Werkzeugmaschine für die trennende Werkstückbearbeitung mittels eines Trennstrahls, wobei bei einem Sollzustand der Auflageleiste
- die Auflageleiste mit mehreren Auflagevorsprüngen versehen ist, die einander in einer Längsrichtung der Auflageleiste benachbart sind, wobei zwischen einander benachbarten Auflagevorsprüngen ein Vorsprungzwischenraum ausgebildet ist,
- die Auflagevorsprünge von einem Grundkörper der Auflageleiste in Richtung einer Höhe der Auflageleiste quer zu der Längsrichtung der Auflageleiste zu einer Lagerungsseite der Auflageleiste hin vorstehen, wobei die Lagerungsseite der Auflageleiste für die Lagerung des Werkstücks ausgebildet ist und
- die Auflagevorsprünge in einer Ansicht auf eine in der Längsrichtung der Auflageleiste verlaufende Längsseite der Auflageleiste eine definierte Soll-Geometrie aufweisen mit einer Vorsprungshöhe, mit der sich die Auflagevorsprünge über einen definierten und den Auflagevorsprüngen zugeordneten Höhenbereich der Auflageleiste erstrecken.

Die Erfindung betrifft außerdem
- ein Verfahren und eine Vorrichtung zur Bestimmung eines Ist-Zustands einer Werkstückauflage einer Werkzeugmaschine für die trennende Bearbeitung eines plattenartigen Werkstücks, insbesondere eines Blechs, mittels eines Trennstrahls, wobei die Werkstückauflage zur Lagerung des Werkstücks mehrere Auflageleisten der vorgenannten Art umfasst, die mit einer Längsrichtung gleichgerichtet verlaufen und die in einer Querrichtung voneinander beabstandet sind,
- ein Verfahren zum trennenden Bearbeiten eines plattenartigen Werkstücks, insbesondere eines Blechs, an einer Werkzeugmaschine für die trennende Werkstückbearbeitung mittels eines Trennstrahls, wobei das Werkstück bei der Bearbeitung auf einer Werkstückauflage der vorgenannten Art gelagert ist sowie
- eine Werkzeugmaschine mit einer Vorrichtung der vorgenannten Art zur Bestimmung eines Ist-Zustands einer Werkstückauflage der Werkzeugmaschine.

Beispielsweise an Laserflachbettmaschinen für die trennende Blechbearbeitung mittels Laser ruhen die Bleche während ihrer Bearbeitung auf Auflagevorsprüngen von Auflageleisten, die an einem Palettenrahmen einer Werkstückpalette mit ihrer Längsrichtung parallel zueinander und in ihrer Querrichtung voneinander beabstandet montiert sind. Bearbeitungsbedingt werden Auflagevorsprünge verschlissen und/oder beschädigt, beispielsweise abgeschmolzen. Dadurch kann die Funktionsfähigkeit der Auflageleisten und der von diesen gebildeten Werkstückauflage beeinträchtigt werden, was sich wiederum negativ auf den Bearbeitungsprozess auswirken kann.

Gattungsgemäßer Stand der Technik ist offenbart in DE 10 2017 210 182 A1, welche die Basis für den Oberbegriff der unabhängigen Ansprüche bildet. Dieses Dokument betrifft Verfahren und Vorrichtungen zur Bewertung des Ist-Zustands und zur Instandhaltung von Auflageleisten und einer von Auflageleisten gebildeten Werkstückauflage, im Falle derer der Ist-Zustand einer Quererstreckung der Auflageleisten erfasst und mit einem Soll-Zustand verglichen wird. Zur Erfassung der Quererstreckung werden die Auflageleisten durch eine Lichtschranke mit einem in Längsrichtung der Auflageleisten verlaufenden optischen Strahl bewegt oder mittels einer Zeilenkamera gescannt. Bei Feststellung einer entsprechend ausgeprägten Abweichung der erfassten Quererstreckung einer Auflageleiste von dem Soll-Zustand wird die betreffende Auflageleiste instandgesetzt oder ausgetauscht.

Die Aufgabe der vorliegenden Erfindung besteht darin, Verfahren und Vorrichtungen bereitzustellen, die es erlauben, weitere funktionsrelevante Merkmale einer Auflageleiste und einer von Auflageleisten gebildeten Werkstückauflage zu überwachen und die gewonnenen Erkenntnisse über den Ist-Zustand der Auflageleiste und der Werkstückauflage zur Gewährleistung eines funktionierenden Bearbeitungsprozesses zu verwerten.

Erfindungsgemäß gelöst wird diese Aufgabe durch die Verfahren und Vorrichtungen gemäß den Patentansprüchen 1, 5, 8 und 9 zur Bestimmung eines Ist-Zustands einer Auflageleiste und einer von mehreren Auflageleisten gebildeten Werkstückauflage, durch das Verfahren gemäß Patentanspruch 7 zum trennenden Bearbeiten eines plattenartigen Werkstücks und durch die Werkzeugmaschine gemäß Patentanspruch 12 für die trennende Bearbeitung eines plattenartigen Werkstücks.

Im Falle der Erfindung wird die Ist-Geometrie, vorzugsweise die tatsächliche Höhe, von Auflagevorsprüngen an Auflageleisten zur Lagerung von plattenartigen Werkstücken während der trennenden Bearbeitung mittels eines Trennstrahls, insbesondere zur Lagerung von Blechen während der trennenden Bearbeitung mittels Laser, nach einem Lichtschnittverfahren über die Höhe der Auflagevorsprünge bestimmt und mit einer entsprechenden, zuvor definierten Soll-Geometrie verglichen. Die Positionen der detektierten Bereiche einer Auflageleiste sind in einem Koordinatensystem einer numerischen Steuerung der mit der betreffenden Auflageleiste beziehungsweise mit der betreffenden Werkstückauflage versehenen Werkzeugmaschine definiert. Der Vergleich der bestimmten Ist-Geometrie der Auflagevorsprünge mit der definierten Soll-Geometrie erfolgt in einer numerischen Vergleichsvorrichtung.

Durch Bestimmen der Ist-Geometrie von Auflagevorsprüngen über die Vorsprungshöhe und durch den Vergleich der bestimmten Ist-Geometrie mit der Soll-Geometrie kann festgestellt werden, in welchem Zustand sich eine Auflageleiste und/oder eine mit der Auflageleiste versehene Werkstückauflage befindet, beispielsweise ob und gegebenenfalls in welchem Umfang Auflagevorsprünge der Auflageleiste abgeschmolzen oder unter Verminderung der Vorsprungshöhe deformiert sind. Aus diesen Erkenntnissen werden im Falle des erfindungsgemäßen Bearbeitungsverfahrens und an der erfindungsgemäßen Werkzeugmaschine Konsequenzen für anschließende Bearbeitungsprozesse gezogen. Im Einzelnen wird im Vorfeld einer trennenden Bearbeitung für das zu bearbeitende Werkstück unter Berücksichtigung der über die Vorsprungshöhe bestimmten Ist-Geometrie der Auflagevorsprünge eine Teilebelegung definiert, aufgrund derer sichergestellt ist, dass der anschließende Bearbeitungsprozess zumindest im Wesentlichen störungsfrei abläuft und/oder dass bei dem anschließenden Bearbeitungsprozess ein Bearbeitungsergebnis erzielt wird, welches den einschlägigen Qualitätsansprüchen genügt. Vorzugsweise wird an dem zu bearbeitenden Werkstück auf der Grundlage der zuvor bestimmten Ist-Geometrie der Auflagevorsprünge und gegebenenfalls anhand der Abweichung der Ist-Geometrie der Auflagevorsprünge von der Soll-Geometrie eine Teilebelegung definiert, aufgrund derer die bei dem anschließenden Bearbeitungsprozess freigeschnittenen Teile durch die Auflagevorsprünge der Auflageleisten verkippungsfrei gelagert werden. Erfindungsgemäß außerdem denkbar ist eine von der Ist-Geometrie der Auflagevorsprünge abhängige Teilebelegung an dem zu bearbeitenden Werkstück dergestalt, dass Einstichstellen des Trennstrahls beziehungsweise eine von dem Trennstrahl an dem Werkstück abgefahrene Trennlinie nicht über intakten Auflagevorsprüngen liegen und dadurch insbesondere das Anschweißen von Butzen an Auflagevorsprüngen vermieden wird.

Die Bestimmung der Ist-Geometrie der Auflagevorsprünge über die Vorsprungshöhe erfolgt erfindungsgemäß nach einem der Art nach bekannten Lichtschnittverfahren, im Rahmen dessen auf die Längsseite einer Auflageleiste eine in der Längsrichtung der Auflageleiste verlaufende Lichtlinie von einer Lichtquelle aus projiziert und mit der Lichtlinie die Längsseite der Auflageleiste über wenigstens einen Teil des den Auflagevorsprüngen zugeordneten Höhenbereichs der Auflageleiste in Richtung der Höhe der Auflageleiste gescannt wird. Die mit der Lichtlinie gescannte Längsseite der Auflageleiste wird in dem gescannten Umfang mittels eines optischen Detektors, insbesondere mittels einer Kamera, unter Erzeugung eines Bildes der Längsseite der Auflageleiste erfasst und anhand des erzeugten Bildes der Längsseite der Auflageleiste wird die Ist-Geometrie der Auflagevorsprünge mittels einer numerischen Auswertevorrichtung nach gängigen Verfahren bestimmt.

Vorzugsweise wird erfindungsgemäß mit einer oder mit mehreren, abgestimmte Filter aufweisenden Kameras die Lichtlinie abgebildet, die sich an einer Auflageleiste relativ zu dieser in Richtung der Höhe der Auflageleiste bewegt und aus den Bildern wird mittels der erfindungsgemäßen Auswertevorrichtung eine dreidimensionale Punktewolke errechnet. Aus dieser Punktewolke kann die Auswertevorrichtung den Zustand, insbesondere die Höhe, der Auflagevorsprünge an der Auflageleiste ableiten.

Alternativ oder ergänzend zu der erfindungsgemäßen bildgebenden Triangulation besteht die Möglichkeit, die Ist-Geometrie von Auflagevorsprüngen an Auflageleisten einer Werkstückauflage über die Vorsprungshöhe kapazitiv, induktiv, ultraschallbasiert, taktil oder mittels andersartiger bildgebender Verfahren zu erfassen.

Dabei kann entweder ein einzelner Sensor eingesetzt werden, welcher die betreffende Auflageleiste in deren Längsrichtung abfährt, oder die Erfassung der Auflagevorsprünge erfolgt mittels eines Sensorarrays, das sich über die gesamte Länge der betreffenden Auflageleiste erstreckt. Bei einem Sensorarray muss je nach Verfahren eine ausreichende, aber nicht zu hohe Dichte an Einzelsensoren sichergestellt sein, damit eine möglichst hohe Auflösung ermöglicht wird, ohne dass es zu einer störenden Überlagerung kommt.

Für die taktile Erfassung von Auflagevorsprüngen kommen in einem Array schaltende Sensoren in Frage wie etwa Zahnradräder oder ein Kamm mit Nadeln. Auch Messkugeln sind als taktile Sensoren denkbar.

Im Rahmen alternativer bildgebender Verfahren kann beispielsweise ein Bild, auf dem die gesamte Werkstückauflage zu sehen ist, durch ein konvolutionelles künstliches neuronales Netz verarbeitet und so der Zustand von Auflagevorsprüngen einer als Teil einer Werkstückauflage vorgesehenen Auflageleiste erkannt werden. Hierbei werden in mehreren Schritten (Schichten des Netzes) zuerst einfache Formen (Linien in gewisser Ausrichtung) und später aus einfachen Formen zusammengesetzte komplexere Formen (Auflagevorsprünge als Kombination zweier Linien) im Bild erkannt. Durch Teachen des neuronalen Netzes mit möglichst vielen Auflageleisten und Beschädigungsgraden kann eine sehr hohe Erkennungsrate erzielt werden.

Auch durch eine Kamera an einem den Trennstrahl auf das zu bearbeitende Werkstück richtenden Schneidkopf können Auflagevorsprünge und damit der Ist-Zustand von Auflageleisten erfasst werden. Zu diesem Zweck wird auf einer Aufnahme zunächst die Auflageleiste vom Hintergrund getrennt. Anschließend wird die Kamera bei fester Brennweite und in auf einen Auflagevorsprung mittels Auto-Fokus fokussiertem Zustand in Richtung der Höhe der Auflageleiste bewegt. Aus dem Betrag der Kamerabewegung in Richtung der Höhe der Auflageleiste lässt sich die Höhe des Auflagevorsprungs errechnen. Ein entsprechendes bildgebendes System wird von der Firma TRUMPF (Johann-Maus-Straße 2, D-71254 Ditzingen) unter dem Namen "DetectLine" angeboten.

Außerdem können durch eine Kamera an einem Laserstrahlgang Auflageleisten einer Werkstückauflage mit eingeschaltetem Laser in Längsrichtung abgefahren werden. Die Stärke der Rückreflexion des Laserlichts ist ein Maß für die Höhe der Auflagevorsprünge an der mit der Kamera in Längsrichtung überfahrenen Auflageleiste. Zur Durchführung eines derartigen bildgebenden Verfahrens eignet sich beispielsweise das gleichfalls von der Firma TRUMPF angebotene bildgebende System namens "PierceLine".

Schließlich kommen zur Erfassung der Ist-Geometrie von Auflagevorsprüngen einer Auflageliste über die Vorsprungshöhe abweichend von dem erfindungsgemä-ßen Lichtschnittverfahren auch eine Streifenbeleuchtung der betreffenden Auflageleiste und ein Durchleuchtungsverfahren in Frage.

Bei der Streifenbeleuchtung einer Auflageleiste werden von einem Projektor unterschiedliche Streifenmuster auf die betreffende Auflageleiste projiziert. Eine oder mehrere Kameras, deren relative Position zum Projektor und zu der Auflageleiste bekannt sein müssen, nehmen die Streifenmuster auf. Aus den entstandenen Bildern lässt sich eine dreidimensionale Punktewolke errechnen, welche die Auflageleiste darstellt. Dabei kann Sub-Pixel-Genauigkeit erzielt werden, da die Streifenmuster bekannt sind. Aus der dreidimensionalen Punktewolke kann die Höhe der Auflagevorsprünge an der Auflageleiste einfach entnommen werden. Bei einer schwierigen Belichtungsumgebung, wie sie beispielsweise in der Blechfertigung häufig anzutreffen ist, empfiehlt sich eine Projektion im nicht-sichtbaren Infrarot-Spektrum mit abgestimmten Filtern vor der oder den Kameras.

Ein Durchleuchtungsverfahrens wird an einer Auflageleiste bei auf der Auflageleiste gelagertem Werkstück durchgeführt. Mit einer Lichtquelle wird das Werkstück an einer Längsseite der Auflageleiste über die Längserstreckung der Auflageleiste von unten belichtet. An der gegenüberliegenden Längsseite der Auflageleiste wird die Auflageleiste an der Unterseite des Werkstücks mittels einer Kamera abgebildet. Die Auflagevorsprünge der Auflageleiste erscheinen dabei als Verdunkelung, die Vorsprungzwischenräume erscheinen hell. Aus dem Schattenriss der Auflagevorsprünge kann deren Ist-Zustand errechnet werden.

Besondere Ausführungsarten der Verfahren und Vorrichtungen gemäß den unabhängigen Patentansprüchen 1, 5, 7, 8, 9 und 12 ergeben sich aus den abhängigen Patentansprüchen 2 bis 4, 6, 10, 11, 13 und 14.

In bevorzugter Ausgestaltung der Erfindung wird als Lichtlinie eine Laserlichtlinie auf die Längsseite der zu erfassenden Auflageleiste projiziert (Patentanspruch 2). Als Projektor ist demnach vorzugsweise ein Linienlaser vorgesehen.

Das Scannen der Längsseite der zu erfassenden Auflageleiste in Richtung ihrer Höhe erfolgt in weiterer Ausgestaltung der Erfindung bei stationärer Auflageleiste und in Richtung der Höhe der Auflageleiste bewegter Lichtlinie und/oder bei stationärer Lichtlinie und auf die Lichtquelle zu oder von der Lichtquelle weg bewegter Auflageleiste (Patentanspruch 3).

Das erfindungsgemäße Verfahren und die erfindungsgemäße Vorrichtung zur Bestimmung der Ist-Geometrie von Auflagevorsprüngen an einer einzelnen Auflageleiste werden in Weiterbildung der Erfindung auch zur Bestimmung der Ist-Geometrie von Auflagevorsprüngen an mehreren, vorzugsweise an sämtlichen Auflageleisten einer Werkstückauflage herangezogen (Patentansprüche 6, 10). In diesem Fall können Positionierbewegungen in Querrichtung der Auflageleisten erzeugt werden, mit denen die zu erfassenden Auflageleisten gegenüber der Lichtquelle der Scanvorrichtung und dem zugehörigen optischen Detektor nacheinander in Positionen zugestellt werden, in denen ein Scanvorgang durchgeführt wird.

Zum Nachsetzen einer Werkstückauflage mit mehreren zu erfassenden Auflageleisten gegenüber einer für sämtliche Auflageleisten vorgesehenen Lichtquelle und einem zugehörigen optischen Detektor ist in Weiterbildung der Erfindung eine Zustellvorrichtung vorgesehen, mittels derer die Werkstückauflage in Querrichtung der Längsseiten der Auflageleisten in Positionen zustellbar ist, in denen die Längsseiten der Auflageleisten nacheinander für die Lichtquelle und den optischen Detektor der Vorrichtung zur Durchführung eines Lichtschnittverfahrens zugänglich sind (Patentanspruch 11).

Die beim Scannen der Längsseite der zu erfassenden Auflageleiste eingesetzten Bewegungsachsen zur Erzeugung der Relativbewegung von Auflageleiste und Lichtlinie in Richtung der Höhe der Auflageleiste und gegebenenfalls auch die Bewegungsachsen zum Nachsetzen von Auflageleisten zwischen einzelnen Scanvorgängen müssen eine hohe Positioniergenauigkeit aufweisen.

In bevorzugter Ausgestaltung der erfindungsgemäßen Werkzeugmaschine wird die zum Scannen der Längsseite einer oder mehrerer Auflageleisten auszuführende Bewegung der Auflageleiste(n) und/oder die Zustellbewegung der Auflageleiste(n) mittels einer Werkstück-Transfervorrichtung erzeugt, die im Übrigen dazu dient, die mit der oder den Auflageleisten versehene Werkstückauflage zu Bearbeitungszwecken in einen Arbeitsbereich der Werkzeugmaschine zu bewegen (Patentanspruch 14).

Zur Gewährleistung definierter Belichtungsverhältnisse wird in weiterer bevorzugter Ausgestaltung der Erfindung die Erfassung der Ist-Geometrie der Auflagevorsprünge an der oder den betreffenden Auflageleisten im Innern einer Einhausung der Werkzeugmaschine durchgeführt. Als Einhausung kommt insbesondere die räumliche Abgrenzung eines Arbeitsbereichs der erfindungsgemäßen Werkzeugmaschine in Frage (Patentansprüche 4, 13).

Nachfolgend wird die Erfindung anhand beispielhafter schematischer Darstellungen näher erläutert. Es zeigen:
- Figur 1: eine Laser-Flachbettmaschine für die trennenden Blechbearbeitung mittels Laser,
- Figur 2: eine Teildarstellung einer der Auflageleisten einer Werkstückauflage der Laser-Flachbettmaschine gemäß Figur 1,
- Figur 3: die Erfassung des Ist-Zustands der Werkstückauflage der Laser-Flachbettmaschine gemäß Figur 1 und
- Figur 4: eine stark schematische Darstellung des Erfassungsvorgangs gemäß Figur 3 in der Ansicht in Richtung des Pfeils IV in Figur 3.

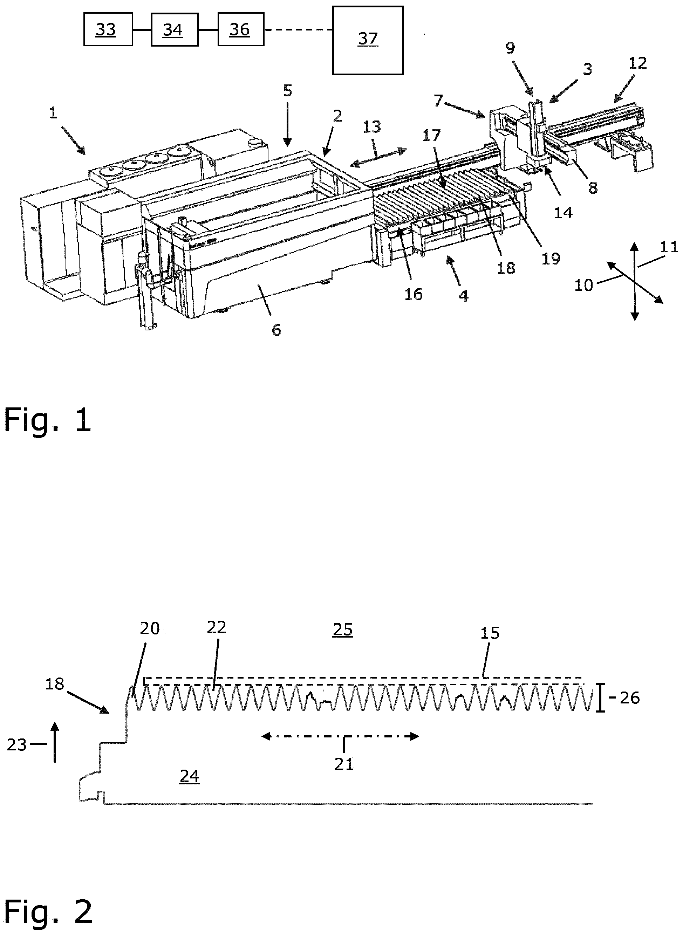

Gemäß Figur 1 umfasst eine Werkzeugmaschine in Form einer Laser-Flachbettmaschine 1 zum Laserschneiden von in Figur 1 nicht gezeigten Blechen eine Bearbeitungseinheit 2, eine Handlingvorrichtung 3 sowie einen Palettenwechsler 4.

Ein Arbeitsraum 5 der Bearbeitungseinheit 2 ist mit einer Einhausung 6 versehen. In dem Arbeitsraum 5 wird mittels eines als Bearbeitungsvorrichtung vorgesehenen herkömmlichen Laserschneidkopfs die trennende Bearbeitung von Blechen durchgeführt. In der Abbildung ist der Laserschneidkopf durch die Einhausung 6 verdeckt.

Die Handlingvorrichtung 3 weist eine Bewegungseinheit 7 mit einem horizontalen Ausleger 8 und einer Serviceeinheit 9 auf, die in Richtung eines Doppelpfeils 10 längs des Auslegers 8 verfahren kann. Zusätzlich zu der Bewegungsmöglichkeit in Richtung des Doppelpfeils 10 kann die Serviceeinheit 9 in vertikaler Richtung (Doppelpfeil 11) angehoben und abgesenkt werden.

Gemeinsam mit der Serviceeinheit 9 ist die Bewegungseinheit 7 entlang einer Führungsstruktur 12 der Handlingvorrichtung 3 in Richtung eines Doppelpfeils 13 verfahrbar. An der Serviceeinheit 9 ist ein Saugerrahmen 14 installiert.

Die Führungsstruktur 12 der Handlingvorrichtung 3 verläuft längs des Palettenwechslers 4. Der Palettenwechsler 4 ist herkömmlicher Bauart und dient wie üblich dazu, den Arbeitsbereich 5 der Bearbeitungseinheit 2 mit zu bearbeitenden Blechen zu beschicken und die bei der trennenden Blechbearbeitung erzeugten Bearbeitungsprodukte aus dem Arbeitsraum 5 der Bearbeitungseinheit 2 abzuführen. Ein Blech 15 ist in Figur 2 gestrichelt angedeutet.

Das zu bearbeitende Blech 15 und auch die Bearbeitungsprodukte sind auf einer konventionellen Werkstückpalette 16 gelagert, die mit einer Werkstückauflage 17 versehen ist. Die Werkstückauflage 17 wird in üblicher Weise von einer Mehrzahl von Auflageleisten 18 gebildet, die ihrerseits an einem Palettenrahmen 19 der Werkstückpalette 16 montiert sind und dort mit gegenseitigem Abstand parallel zueinander verlaufen. Gemeinsam definieren die Auflageleisten 18 eine horizontale Auflageebene der Werkstückauflage 17.

Die Handlingvorrichtung 3 wird als Be- und/oder Entladevorrichtung genutzt. Ein zu bearbeitendes Blech 15 wird wie gewohnt mit Hilfe des Saugerrahmens 14 der Serviceeinheit 9 von einem nicht gezeigten Rohblechstapel aufgenommen und an dem Palettenwechsler 4 auf einer leeren Werkstückpalette 16 abgelegt. Anschließend wird die mit dem zu bearbeitenden Blech 15 beladene Werkstückpalette 16 mittels einer als Kettenantrieb ausgebildeten Werkstück-Transfervorrichtung des Palettenwechslers 4 mit einer horizontalen Transferbewegung durch eine in Figur 1 verdeckte Öffnung der Einhausung 6 in den Arbeitsraum 5 der Bearbeitungseinheit 2 geschoben. In dem Arbeitsraum 5 der Bearbeitungseinheit 2 folgt die trennende Blechbearbeitung, im Rahmen derer aus dem Blech 15 als Bearbeitungsprodukte Fertigteile und ein Restgitter erzeugt werden.

Gemeinsam mit der Werkstückpalette 16 werden die Bearbeitungsprodukte der trennenden Blechbearbeitung mit Hilfe des Kettenantriebs des Palettenwechslers 4 durch die Öffnung der Einhausung 6 aus dem Arbeitsraum 5 der Bearbeitungseinheit 2 heraus auf den Palettenwechsler 4 gezogen. Die an dem Palettenwechsler 4 angeordnete Werkstückpalette 16 wird dann mittels der Handlingvorrichtung 3 entladen.

Figur 1 zeigt die maschinelle Anordnung 1 zu einem Zeitpunkt, zu welchem die an dem Palettenwechsler 4 angeordnete Werkstückpalette 16 vollständig entladen ist.

Eine der baugleichen Auflageleisten 18 der Werkstückauflage 17 ist in Figur 2 dargestellt.

Die Auflageleiste 18 ist mit mehreren Auflagevorsprüngen 20 versehen, die einander in einer Längsrichtung 21 der Auflageleiste 18 benachbart sind. Zwischen einander benachbarten Auflagevorsprüngen 20 ist jeweils ein Vorsprungzwischenraum 22 ausgebildet. In Richtung einer Höhe (Pfeil 23) der Auflageleiste 18 stehen die Auflagevorsprünge 20 von einem Grundkörper 24 der Auflageleiste 18 quer zu der Längsrichtung 21 der Auflageleiste 18 zu einer Lagerungsseite 25 der Auflageleiste 18 hin vor. An der Lagerungsseite 25 sind die Auflagevorsprünge 20 mit Spitzen zur Lagerung eines Blechs 15 während der trennenden Bearbeitung versehen. Zur Ausbildung der Werkstückauflage 17 sind mehrere Auflageleisten 18 derart an dem Palettenrahmen 19 montiert, dass sie mit ihrer Längsrichtung 21 gleichgerichtet verlaufen und quer dazu voneinander beabstandet sind.

Bei einem Soll-Zustand der Auflageleiste 18 weisen die Auflagevorsprünge 20 in der in Figur 2 gezeigten Ansicht auf eine in der Längsrichtung 21 der Auflageleiste 18 verlaufende Längsseite der Auflageleiste 18 eine definierte Soll-Geometrie auf mit einer Vorsprungshöhe 26, mit der sich die Auflagevorsprünge 20 über einen definierten und den Auflagevorsprüngen 20 zugeordneten Höhenbereich der Auflageleiste 18 erstrecken.

Bei der trennenden Blechbearbeitung werden die Auflageleisten 18 der Werkstückauflage 17 in Mitleidenschaft gezogen. Ausweislich Figur 2 wurden bei vorausgegangenen Bearbeitungsprozessen mehrere der Auflagevorsprünge 20 durch den für die trennende Blechbearbeitung eingesetzten und von dem Laserschneidkopf auf ein Blech 15 gerichteten Laser-Trennstrahl über einen Teil der ursprünglichen Vorsprungshöhe 26 abgeschmolzen.

Aufgrund der Beschädigung einzelner Auflagevorsprünge 20 an einer oder mehreren Auflageleisten 18 kann die Funktionsfähigkeit der Werkstückauflage 17 beeinträchtigt sein. Insbesondere besteht die Gefahr, dass Teile, die bei der trennenden Blechbearbeitung freigeschnitten werden, infolge der uneinheitlichen Höhe der Auflagevorsprünge 20 auf der Werkstückauflage 17 verkippen und dass in der Folge beim maschinellen Entladen der Werkstückauflage 17 Störungen auftreten.

Um eine Störung des Prozessablaufs an der Laser-Flachbettmaschine 1 zu verhindern, wird der Ist-Zustand der Werkstückauflage 17 in regelmäßigen Zeitabständen bei entladener Werkstückauflage 17 bestimmt und mit einem Soll-Zustand der Werkstückauflage 17 verglichen.

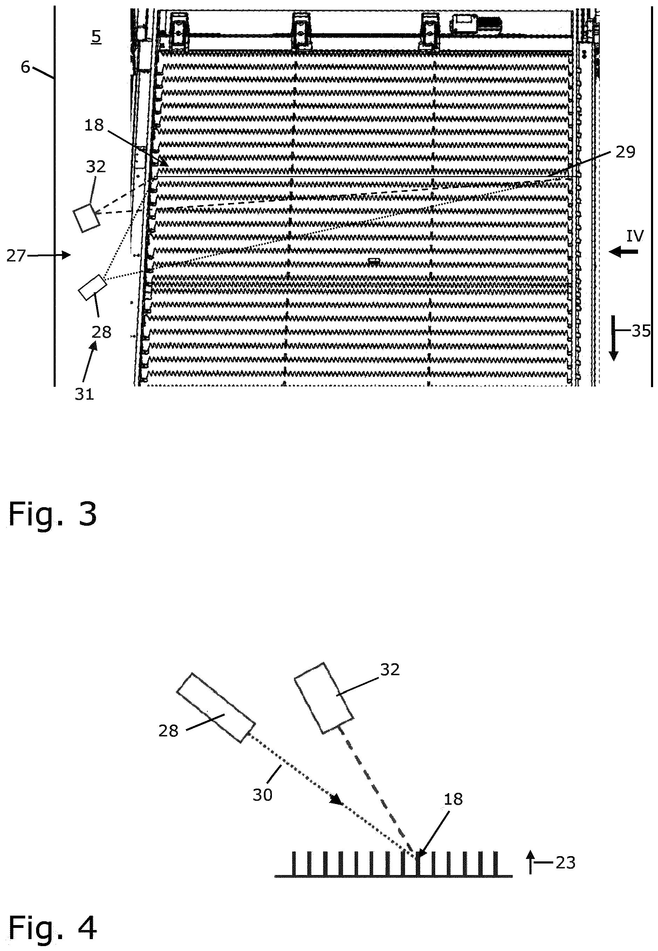

Die Bestimmung des Ist-Zustands der Werkstückauflage 17 ist in den Figuren 3 und 4 veranschaulicht.

Zur Bestimmung des Ist-Zustands der Werkstückauflage 17 wird an sämtlichen Auflageleisten 18 der Werkstückauflage 17 nacheinander die Ist-Geometrie der Auflagevorsprünge 20 nach einem Lichtschnittverfahren bestimmt. Im Interesse optimaler Lichtverhältnisse bei der Durchführung des Lichtschnittverfahrens erfolgt die Bestimmung der Ist-Geometrie der Auflagevorsprünge 20 an den Auflageleisten 18 im abgedunkelten Innern des von der Einhausung 6 umgebenen Arbeitsraums 5 der Laser-Flachbettmaschine 1 (Figur 3).

Eine Vorrichtung 27 zur Durchführung des Lichtschnittverfahrens weist als Lichtquelle einen Linienlaser 28 auf, der auf die ihm zugewandte Längsseite der zu erfassenden Auflageleiste 18 als Lichtlinie eine in der Längsrichtung 21 der Auflageleiste 18 verlaufende Laserlichtlinie 29 projiziert. Die Projektion der Laserlichtlinie 29 auf die Längsseite der Auflageleiste 18 erfolgt unter einem von einem rechten Winkel abweichenden Winkel in einer in Figur 4 gestrichelt angedeuteten Projektionsrichtung 30.

Der Linienlaser 28 ist Teil einer Scanvorrichtung 31, mittels derer die Längsseite der Auflageleiste 18 mit der Laserlichtlinie 29 über wenigstens einen Teil des den Auflagevorsprüngen 20 zugeordneten Höhenbereichs der Auflageleiste 18 in der Richtung 23 der Höhe der Auflageleiste 18 gescannt wird. Zur Erzeugung der von der Laserlichtlinie 29 in der Richtung 23 relativ zu der Auflageleiste 18 auszuführenden Bewegung nutzt die Scanvorrichtung 31 die Werkstück-Transfervorrichtung des Palettenwechslers 4, mittels derer die mit der Laserlichtlinie 29 belichtete Auflageleiste 18 entgegen der Projektionsrichtung 30 in Richtung auf den Linienlaser 28 bewegt wird.

Eine als optischer Detektor der Vorrichtung 27 zur Durchführung des Lichtschnittverfahrens vorgesehene Kamera 32 erfasst die mit der Laserlichtlinie 29 gescannte Längsseite der Auflageleiste 18 in dem gescannten Umfang unter Erzeugung eines Bildes der Längsseite der Auflageleiste 18. Anhand des von der Kamera 32 erzeugten Bildes bestimmt eine numerische Auswertevorrichtung 33 der Vorrichtung 27 zur Durchführung des Lichtschnittverfahrens mittels herkömmlicher Triangulation die Ist-Geometrie der Auflagevorsprünge 20 an der Auflageleiste 18, im Einzelnen die tatsächliche Höhe der Auflagevorsprünge. Die numerische Auswertevorrichtung 33 der Vorrichtung 27 zur Durchführung des Lichtschnittverfahrens ist in Figur 1 stark schematisch dargestellt.

Die mittels der Vorrichtung 27 zur Durchführung des Lichtschnittverfahrens bestimmte Ist-Geometrie der Auflagevorsprünge 20 wird in einer numerischen Vergleichsvorrichtung 34 mit einer dort hinterlegten Soll-Geometrie der Auflagevorsprünge 20 verglichen. An der in Figur 2 dargestellten Auflageleiste 18 wird dabei erkannt, dass einzelne Auflagevorsprünge 20 abgeschmolzen sind.

In der vorstehenden Weise wird nacheinander mit sämtlichen Auflageleisten 18 der Werkstückauflage 17 verfahren. Nach Abschluss der Bestimmung des Ist-Zustands einer Auflageleiste 18 wird die Werkstückauflage 17 mittels der Werkstück-Transfervorrichtung des Palettenwechslers 4 in einer in Figur 3 durch einen Pfeil 35 veranschaulichten Zustellrichtung nachgesetzt, so dass die einer erfassten Auflageleiste 18 entgegen der Zustellrichtung 35 benachbarte Auflageleiste 18 in die Erfassungsposition gemäß Figur 3 gelangt und der Ist-Zustand der weiteren Auflageleiste 18 beziehungsweise die tatsächliche Höhe der an dieser Auflageleiste 18 vorgesehenen Auflagevorsprünge 20 unter Scannen der Auflageleiste 18 in der Richtung 23 ihrer Höhe bestimmt werden kann. Ergänzend oder alternativ zu einer Nachsetzbewegung der Werkstückauflage 17 in der Zustellrichtung 35 können der Linienlaser 28 und die Kamera 32 zur Erfassung der einer erfassten Auflageleiste 18 entgegen der Zustellrichtung 35 benachbarten Auflageleiste 18 verstellt werden.

Aus dem Ist-Zustand der einzelnen Auflageleisten 18 wird von einer numerischen Auswerteeinheit 36 der Ist-Zustand der Werkstückauflage 17 bestimmt. Im Einzelnen wird dabei ermittelt, an welchen Stellen der Werkstückauflage 17 sich schadhafte Auflagevorsprünge 20 befinden.

Diese Informationen werden bei der Programmierung einer numerischen Maschinensteuerung 37 der Laser-Flachbettmaschine 1 für nachfolgende Bearbeitungsprozesse berücksichtigt. Im vorliegenden Beispielsfall wird für ein nachfolgend zu bearbeitendes Blech 15 eine Teilebelegung definiert, aufgrund derer die aus dem Blech 15 ausgetrennten Teile auf der Werkstückauflage ungeachtet der schadhaften Auflagevorsprünge 20 verkippungsfrei gelagert sind. Außerdem wird durch eine entsprechende Teilebelegung des nachfolgend zu bearbeitenden Blechs 15 dafür Sorge getragen, dass Einstichstellen des von dem Laserschneidkopf der Bearbeitungseinheit 2 auf das Blech 15 gerichteten Laser-Trennstrahls nicht über einem intakten Auflagevorsprung 20 der Werkstückauflage 17 liegen und dass die von dem Laser-Trennstrahl an dem Blech 15 abgefahrene Schneidbahn über Vorsprungzwischenräume 22 und/oder über abgeschmolzene Auflagevorsprünge 20 verläuft.

## Patentansprüche

1. Verfahren zur Bestimmung eines Ist-Zustands einer Auflageleiste (18) zur Lagerung eines plattenartigen Werkstücks, insbesondere eines Blechs (15), an einer Werkzeugmaschine (1) für die trennende Werkstückbearbeitung mittels eines Trennstrahls, wobei bei einem Sollzustand der Auflageleiste (18)
• die Auflageleiste (18) mit mehreren Auflagevorsprüngen (20) versehen ist, die einander in einer Längsrichtung (21) der Auflageleiste (18) benachbart sind, wobei zwischen einander benachbarten Auflagevorsprüngen (20) ein Vorsprungzwischenraum (22) ausgebildet ist,
• die Auflagevorsprünge (20) von einem Grundkörper (24) der Auflageleiste (18) in Richtung (23) einer Höhe der Auflageleiste (18) quer zu der Längsrichtung (21) der Auflageleiste (18) zu einer Lagerungsseite (25) der Auflageleiste (18) hin vorstehen, wobei die Lagerungsseite (25) der Auflageleiste (18) für die Lagerung des Werkstücks ausgebildet ist und
• die Auflagevorsprünge (20) in einer Ansicht auf eine in der Längsrichtung (21) der Auflageleiste (18) verlaufende Längsseite der Auflageleiste (18) eine definierte Soll-Geometrie aufweisen mit einer Vorsprungshöhe (26), mit der sich die Auflagevorsprünge (20) über einen definierten und den Auflagevorsprüngen (20) zugeordneten Höhenbereich der Auflageleiste (18) erstrecken,
**dadurch gekennzeichnet,**
**dass** an der Auflageleiste (18) eine Ist-Geometrie der Auflagevorsprünge (20) nach einem Lichtschnittverfahren bestimmt wird,
• indem auf die Längsseite der Auflageleiste (18) eine in der Längsrichtung (21) der Auflageleiste (18) verlaufende Lichtlinie (29) von einer Lichtquelle (28) aus projiziert und mit der Lichtlinie (29) die Längsseite der Auflageleiste (18) über wenigstens einen Teil des den Auflagevorsprüngen (20) zugeordneten Höhenbereichs der Auflageleiste (18) in Richtung (23) der Höhe der Auflageleiste (18) gescannt wird,
• indem die mit der Lichtlinie (29) gescannte Längsseite der Auflageleiste (18) in dem gescannten Umfang mittels eines optischen Detektors (32) unter Erzeugung eines Bildes der Längsseite der Auflageleiste (18) erfasst wird und
• indem anhand des erzeugten Bildes der Längsseite der Auflageleiste (18) die Ist-Geometrie der Auflagevorsprünge (20) mittels einer Auswertevorrichtung (33) bestimmt wird
und
**dass** die bestimmte Ist-Geometrie der Auflagevorsprünge (20) mittels einer Vergleichsvorrichtung (34) mit der definierten Soll-Geometrie der Auflagevorsprünge (20) verglichen wird.

2. Verfahren nach Anspruch 1, **dadurch gekennzeichnet, dass** als Lichtlinie (29) eine Laserlichtlinie auf die Längsseite der Auflageleiste (18) projiziert wird.

3. Verfahren nach einem der vorhergehenden Ansprüche, **dadurch gekennzeichnet, dass** die Längsseite der Auflageleiste (18) mit der Lichtlinie (29) gescannt wird,
• indem die Lichtlinie (29) parallel zu sich selbst relativ zu der Auflageleiste (18) in Richtung (23) der Höhe der Auflageleiste (18) bewegt wird und/oder
• indem die Lichtlinie (29) von der Lichtquelle (28) aus auf die Längsseite der Auflageleiste (18) unter einem von einem rechten Winkel abweichenden Winkel projiziert wird, der zwischen einer Projektionsrichtung (30) und der Richtung (23) der Höhe der Auflageleiste (18) ausgebildet ist und indem die Auflageleiste (18) entgegen der Projektionsrichtung (30) in Richtung auf die Lichtquelle (28) oder in der Projektionsrichtung (30) von der Lichtquelle (28) weg bewegt wird.

4. Verfahren nach einem der vorhergehenden Ansprüche, **dadurch gekennzeichnet, dass** das Verfahren im Innern einer Einhausung (6) der Werkzeugmaschine (1) durchgeführt wird, vorzugsweise im Innern einer mit einer Bearbeitungsvorrichtung für die trennende Werkstückbearbeitung versehenen Einhausung (6).

5. Verfahren zur Bestimmung eines Ist-Zustands einer Werkstückauflage (17) einer Werkzeugmaschine (1) für die trennende Bearbeitung eines plattenartigen Werkstücks, insbesondere eines Blechs (15), mittels eines Trennstrahls,
• wobei die Werkstückauflage (17) zur Lagerung des Werkstücks mehrere Auflageleisten (18) umfasst, die mit einer Längsrichtung (21) gleichgerichtet verlaufen und die in einer Querrichtung voneinander beabstandet sind und
• wobei bei einem Sollzustand der Auflageleisten (18)
- die Auflageleisten (18) jeweils mit mehreren Auflagevorsprüngen (20) versehen sind, die einander in einer Längsrichtung (21) der Auflageleisten (18) benachbart sind, wobei zwischen einander benachbarten Auflagevorsprüngen (20) ein Vorsprungzwischenraum (22) ausgebildet ist,
- die Auflagevorsprünge (20) jeweils von einem Grundkörper (24) der Auflageleiste (18) in Richtung (23) einer Höhe der Auflageleiste (18) quer zu der Längsrichtung (21) der Auflageleiste (18) zu einer Lagerungsseite (25) der Auflageleiste (18) hin vorstehen, wobei die Lagerungsseite (25) der Auflageleiste (18) für die Lagerung des Werkstücks ausgebildet ist und
- die Auflagevorsprünge (20) jeweils in einer Ansicht auf eine in der Längsrichtung (21) der Auflageleiste (18) verlaufende Längsseite der Auflageleiste (18) eine definierte Soll-Geometrie aufweisen mit einer Vorsprungshöhe (26), mit der sich die Auflagevorsprünge (18) über einen definierten und den Auflagevorsprüngen (20) zugeordneten Höhenbereich der Auflageleiste (18) erstrecken,
**dadurch gekennzeichnet, dass** der Ist-Zustand wenigstens einer der Auflageleisten (18) der Werkstückauflage (17) nach dem Verfahren gemäß einem der vorhergehenden Ansprüche bestimmt wird.

6. Verfahren nach Anspruch 5, **dadurch gekennzeichnet, dass** der Ist-Zustand jeder der Auflageleisten (18) der Werkstückauflage (17) nach dem Verfahren gemäß einem der Ansprüche 1 bis 4 bestimmt wird,
• wobei an den Auflageleisten (18) die Ist-Geometrie jeder der Auflagevorsprünge (20) nach einem Lichtschnittverfahren bestimmt wird,
- indem auf die Längsseite jeder der Auflageleisten (18) eine in der Längsrichtung (21) der Auflageleiste (18) verlaufende Lichtlinie (29) von einer Lichtquelle (28) aus projiziert und mit der Lichtlinie (29) die Längsseite der Auflageleiste (18) über wenigstens einen Teil des den Auflagevorsprüngen (20) zugeordneten Höhenbereichs der Auflageleiste (18) in Richtung (23) der Höhe der Auflageleiste (18) gescannt wird,
- indem für jede der Auflageleisten (18) die mit der Lichtlinie (29) gescannte Längsseite der Auflageleiste (18) in dem gescannten Umfang mittels eines optischen Detektors (32) unter Erzeugung eines Bildes der Längsseite der Auflageleiste (18) erfasst wird und
- indem für jede der Auflageleisten (18) anhand des erzeugten Bildes der Längsseite der Auflageleiste (18) die Ist-Geometrie der Auflagevorsprünge (20) mittels einer Auswertevorrichtung (33) bestimmt wird
und
• wobei für jede der Auflageleisten (18) die bestimmte Ist-Geometrie der Auflagevorsprünge (20) mittels einer Vergleichsvorrichtung (34) mit der definierten Soll-Geometrie der Auflagevorsprünge (20) verglichen wird.

7. Verfahren zum trennenden Bearbeiten eines plattenartigen Werkstücks, insbesondere eines Blechs (15), an einer Werkzeugmaschine (1) für die trennende Werkstückbearbeitung mittels eines Trennstrahls,
• wobei das Werkstück bei der Bearbeitung auf einer Werkstückauflage (17) der Werkzeugmaschine (1) gelagert ist, die zur Lagerung des Werkstücks mehrere Auflageleisten (18) umfasst, die mit einer Längsrichtung (21) gleichgerichtet verlaufen und die in einer Querrichtung voneinander beabstandet sind,
• wobei bei einem Sollzustand der Auflageleisten (18)
- die Auflageleisten (18) jeweils mit mehreren Auflagevorsprüngen (20) versehen sind, die einander in einer Längsrichtung (21) der Auflageleisten (18) benachbart sind, wobei zwischen einander benachbarten Auflagevorsprüngen (20) ein Vorsprungzwischenraum (22) ausgebildet ist,
- die Auflagevorsprünge (20) jeweils von einem Grundkörper (24) der Auflageleiste (18) in Richtung (23) einer Höhe der Auflageleiste (18) quer zu der Längsrichtung (21) der Auflageleiste (18) zu einer Lagerungsseite (25) der Auflageleiste (18) hin vorstehen, wobei die Lagerungsseite (25) der Auflageleiste (18) für die Lagerung des Werkstücks ausgebildet ist und
- die Auflagevorsprünge (20) jeweils in einer Ansicht auf eine in der Längsrichtung (21) der Auflageleiste (18) verlaufende Längsseite der Auflageleiste (18) eine definierte Soll-Geometrie aufweisen mit einer Vorsprungshöhe (26), mit der sich die Auflagevorsprünge (20) über einen definierten und den Auflagevorsprüngen (20) zugeordneten Höhenbereich der Auflageleiste (18) erstrecken,
**dadurch gekennzeichnet,**
**dass** der Ist-Zustand der Werkstückauflage (17) nach dem Verfahren gemäß Anspruch 5 oder Anspruch 6 bestimmt wird,
**dass** für das Werkstück in Abhängigkeit von dem erfassten Ist-Zustand der Werkstückauflage (17) eine Teilebelegung mit bei der trennenden Bearbeitung des Werkstücks zu erzeugenden Werkstückteilen definiert wird und
**dass** das Werkstück und der auf das Werkstück gerichtete Trennstrahl bei der trennenden Werkstückbearbeitung relativ zueinander entlang einer Trennbahn bewegt werden, deren Verlauf der definierten Teilebelegung des Werkstücks entspricht.

8. Vorrichtung zur Bestimmung eines Ist-Zustands einer Auflageleiste (18) zur Lagerung eines plattenartigen Werkstücks, insbesondere eines Blechs (15), an einer Werkzeugmaschine (1) für die trennende Werkstückbearbeitung mittels eines Trennstrahls, wobei bei einem Sollzustand der Auflageleiste (18)
• die Auflageleiste (18) mit mehreren Auflagevorsprüngen (20) versehen ist, die einander in einer Längsrichtung (21) der Auflageleiste (18) benachbart sind, wobei zwischen einander benachbarten Auflagevorsprüngen (20) ein Vorsprungzwischenraum (22) ausgebildet ist,
• die Auflagevorsprünge (20) von einem Grundkörper (24) der Auflageleiste (18) in Richtung (23) einer Höhe der Auflageleiste (18) quer zu der Längsrichtung (21) der Auflageleiste (18) zu einer Lagerungsseite (25) der Auflageleiste (18) hin vorstehen, wobei die Lagerungsseite (25) der Auflageleiste (18) für die Lagerung des Werkstücks ausgebildet ist und
• die Auflagevorsprünge (20) in einer Ansicht auf eine in der Längsrichtung (21) der Auflageleiste (18) verlaufende Längsseite der Auflageleiste (18) eine definierte Soll-Geometrie aufweisen mit einer Vorsprungshöhe (26), mit der sich die Auflagevorsprünge (20) über einen definierten und den Auflagevorsprüngen (20) zugeordneten Höhenbereich der Auflageleiste (18) erstrecken,
**dadurch gekennzeichnet, dass**
die Vorrichtung als Vorrichtung zur Bestimmung einer Ist-Geometrie der Auflagevorsprünge (20) der Auflageleiste (18) ausgebildet ist, indem die Vorrichtung eine Vorrichtung (27) zur Durchführung eines Lichtschnittverfahrens sowie eine Vergleichsvorrichtung (34) umfasst,
• wobei die Vorrichtung (27) zur Durchführung eines Lichtschnittverfahrens aufweist:
- eine Scanvorrichtung (31), die eine Lichtquelle (28) umfasst, von der aus auf die Längsseite der Auflageleiste (18) eine in der Längsrichtung (21) der Auflageleiste (18) verlaufende Lichtlinie (29) projizierbar ist und mittels derer die Längsseite der Auflageleiste (18) mit der Lichtlinie (29) über wenigstens einen Teil des den Auflagevorsprüngen (20) zugeordneten Höhenbereichs der Auflageleiste (18) in Richtung (23) der Höhe der Auflageleiste (18) scanbar ist,
- einen optischen Detektor (32), mittels dessen die mit der Lichtlinie (29) gescannte Längsseite der Auflageleiste (18) in dem gescannten Umfang unter Erzeugung eines Bildes der Längsseite der Auflageleiste (18) erfassbar ist sowie
- eine Auswertevorrichtung (33), mittels derer anhand des erzeugten Bildes der Längsseite der Auflageleiste (18) die Ist-Geometrie der Auflagevorsprünge (20) bestimmbar ist
und
• wobei mittels der Vergleichsvorrichtung (34) die bestimmte Ist-Geometrie der Auflagevorsprünge (20) mit der definierten Soll-Geometrie der Auflagevorsprünge (20) vergleichbar ist.

9. Vorrichtung zur Bestimmung eines Ist-Zustands einer Werkstückauflage (17) einer Werkzeugmaschine (1) für die trennende Bearbeitung eines plattenartigen Werkstücks, insbesondere eines Blechs (15), mittels eines Trennstrahls,
• wobei die Werkstückauflage (17) zur Lagerung des Werkstücks mehrere Auflageleisten (18) umfasst, die mit einer Längsrichtung (21) gleichgerichtet verlaufen und die in einer Querrichtung voneinander beabstandet sind und
• wobei bei einem Sollzustand der Auflageleisten (18)
- die Auflageleisten (18) jeweils mit mehreren Auflagevorsprüngen (20) versehen sind, die einander in einer Längsrichtung (21) der Auflageleisten (18) benachbart sind, wobei zwischen einander benachbarten Auflagevorsprüngen (20) ein Vorsprungzwischenraum (22) ausgebildet ist,
- die Auflagevorsprünge (20) jeweils von einem Grundkörper (24) der Auflageleiste (18) in Richtung (23) einer Höhe der Auflageleiste (18) quer zu der Längsrichtung (21) der Auflageleiste (18) zu einer Lagerungsseite (25) der Auflageleiste (18) hin vorstehen, wobei die Lagerungsseite (25) der Auflageleiste (18) für die Lagerung des Werkstücks ausgebildet ist und
- die Auflagevorsprünge (20) jeweils in einer Ansicht auf eine in der Längsrichtung (21) der Auflageleiste (18) verlaufende Längsseite der Auflageleiste (18) eine definierte Soll-Geometrie aufweisen mit einer Vorsprungshöhe (26), mit der sich die Auflagevorsprünge (20) über einen definierten und den Auflagevorsprüngen (20) zugeordneten Höhenbereich der Auflageleiste (18) erstrecken
und
• wobei die Vorrichtung für wenigstens eine der Auflageleisten (18) eine Vorrichtung zur Bestimmung eines Ist-Zustands der Auflageleiste (18) aufweist,
**dadurch gekennzeichnet, dass** für wenigstens eine der Auflageleisten (18) als Vorrichtung zur Bestimmung eines Ist-Zustands der Auflageleiste (18) die Vorrichtung gemäß Anspruch 8 vorgesehen ist.

10. Vorrichtung nach Anspruch 9, **dadurch gekennzeichnet, dass** für die Auflageleisten (18) der Werkstückauflage (17) die Vorrichtung gemäß Anspruch 8 als gemeinsame Vorrichtung zur Bestimmung eines Ist-Zustands der Auflageleisten (18) vorgesehen ist,
• wobei die Vorrichtung (27) zur Durchführung eines Lichtschnittverfahrens aufweist:
- eine Scanvorrichtung (31), die eine Lichtquelle (28) umfasst, von der aus auf die Längsseite jeder der Auflageleisten (18) eine in der Längsrichtung (21) der Auflageleiste (18) verlaufende Lichtlinie (29) projizierbar ist und mittels derer die Längsseite jeder der Auflageleisten (18) mit der Lichtlinie (29) über wenigstens einen Teil des den Auflagevorsprüngen (20) zugeordneten Höhenbereichs der Auflageleiste (18) in Richtung (23) der Höhe der Auflageleiste (18) scanbar ist,
- einen optischen Detektor (32), mittels dessen für jede der Auflageleisten (18) die mit der Lichtlinie (29) gescannte Längsseite der Auflageleiste (18) in dem gescannten Umfang unter Erzeugung eines Bildes der Längsseite der Auflageleiste (18) erfassbar ist sowie
- eine Auswertevorrichtung (33), mittels derer für jede der Auflageleisten (18) anhand des erzeugten Bildes der Längsseite der Auflageleiste (18) die Ist-Geometrie der Auflagevorsprünge (20) bestimmbar ist
und
• wobei mittels der Vergleichsvorrichtung (34) für jede der Auflageleisten (18) die bestimmte Ist-Geometrie der Auflagevorsprünge (20) mit der definierten Soll-Geometrie der Auflagevorsprünge (20) vergleichbar ist.

11. Vorrichtung nach Anspruch 10, **dadurch gekennzeichnet, dass** eine Zustellvorrichtung vorgesehen ist, mittels derer die Werkstückauflage (17) in Querrichtung der Längsseiten der Auflageleisten (18) in Positionen zustellbar ist, in denen die Längsseiten der Auflageleisten (18) nacheinander für die Vorrichtung (27) zur Durchführung eines Lichtschnittverfahrens zugänglich sind.

12. Werkzeugmaschine für die trennende Bearbeitung eines plattenartigen Werkstücks, insbesondere eines Blechs (15), mittels eines Trennstrahls,
• mit einer Werkstückauflage (17), die zur Lagerung des Werkstücks mehrere Auflageleisten (18) umfasst, die mit einer Längsrichtung (21) gleichgerichtet verlaufen und in einer Querrichtung voneinander beabstandet sind, wobei bei einem Sollzustand der Auflageleisten (18)
- die Auflageleisten (18) jeweils mit mehreren Auflagevorsprüngen (20) versehen sind, die einander in einer Längsrichtung (21) der Auflageleisten (18) benachbart sind, wobei zwischen einander benachbarten Auflagevorsprüngen (20) ein Vorsprungzwischenraum (22) ausgebildet ist,
- die Auflagevorsprünge (20) jeweils von einem Grundkörper (24) der Auflageleiste (18) in Richtung (23) einer Höhe der Auflageleiste (18) quer zu der Längsrichtung (21) der Auflageleiste (18) zu einer Lagerungsseite (25) der Auflageleiste (18) hin vorstehen, wobei die Lagerungsseite (25) der Auflageleiste (18) für die Lagerung des Werkstücks ausgebildet ist und
- die Auflagevorsprünge (20) jeweils in einer Ansicht auf eine in der Längsrichtung (21) der Auflageleiste (18) verlaufende Längsseite der Auflageleiste (18) eine definierte Soll-Geometrie aufweisen mit einer Vorsprungshöhe (26), mit der sich die Auflagevorsprünge (20) über einen definierten und den Auflagevorsprüngen (20) zugeordneten Höhenbereich der Auflageleiste (18) erstrecken,
• mit einer Bearbeitungsvorrichtung für die trennende Werkstückbearbeitung, die einen Trennstrahl erzeugt, mittels dessen das Werkstück trennend bearbeitbar ist sowie
• mit einer Vorrichtung zur Bestimmung eines Ist-Zustands der Werkstückauflage (17),
**dadurch gekennzeichnet, dass** als Vorrichtung zur Bestimmung eines Ist-Zustands der Werkstückauflage (17) die Vorrichtung gemäß einem der Ansprüche 9 bis 11 vorgesehen ist.

13. Werkzeugmaschine nach Anspruch 12, **dadurch gekennzeichnet,**
• **dass** ein mit einer Einhausung (6) versehener Arbeitsraum (5) vorgesehen ist, in welchem die Bearbeitungsvorrichtung für die trennende Werkstückbearbeitung bei der trennenden Werkstückbearbeitung angeordnet ist und
• **dass** die Werkstückauflage (17) zur Bestimmung eines Ist-Zustands der Werkstückauflage (17) im Innern der Einhausung (6) anordenbar ist.

14. Werkzeugmaschine nach Anspruch 12 oder Anspruch 13, wobei als Vorrichtung zur Bestimmung eines Ist-Zustands der Werkstückauflage (17) die Vorrichtung gemäß Anspruch 11 vorgesehen ist, **dadurch gekennzeichnet,**
• **dass** die Bearbeitungsvorrichtung für die trennende Werkstückbearbeitung einen Arbeitsbereich aufweist, in welchem ein von der Werkstückauflage (17) gelagertes Werkstück für den Trennstrahl der Bearbeitungsvorrichtung zur trennenden Werkstückbearbeitung zugänglich ist,
• **dass** eine Werkstück-Transfervorrichtung vorgesehen ist, mittels derer die Werkstückauflage (17) zum Bewegen des von der Werkstückauflage (17) gelagerten Werkstücks in den Arbeitsbereich der Bearbeitungsvorrichtung zustellbar ist und
• **dass** die Werkstück-Transfervorrichtung als Zustellvorrichtung der Vorrichtung zur Bestimmung eines Ist-Zustands der Werkstückauflage (17) vorgesehen ist.

## Claims

1. A method for determining an actual state of a support bar (18) for supporting a plate-type workpiece, in particular a metal sheet (15), on a machine tool (1) for cutting workpieces using a cutting beam, wherein in a desired state of the support bar (18)
• the support bar (18) is provided with a plurality of supporting projections (20) which are adjacent to one another in a longitudinal direction (21) of the support bar (18), a projection gap (22) being formed between mutually adjacent supporting projections (20),
• the supporting projections (20) protrude from a main body (24) of the support bar (18) toward a supporting side (25) of the support bar (18) in the direction (23) of a height of the support bar (18) transversely with respect to the longitudinal direction (21) of the support bar (18), wherein the supporting side (25) of the support bar (18) is designed for supporting the workpiece, and
• the supporting projections (20) have a defined desired geometry, viewed from a longitudinal side of the support bar (18) running in the longitudinal direction (21) of the support bar (18), the geometry having a projection height (26) by which the supporting projections (20) extend along a defined support bar (18) height range associated with the supporting projections (20),
**characterized in that**
an actual geometry of the supporting projections (20) on the support bar (18) is determined according to a light section method by
• projecting a line of light (29) extending in the longitudinal direction (21) of the support bar (18) from a light source (28) onto the longitudinal side of the support bar (18) and using the line of light (29) to scan the longitudinal side of the support bar (18) over at least part of the support bar (18) height range associated with the supporting projections (20) in the direction (23) of the height of the support bar (18),
• detecting the longitudinal side of the support bar (18) scanned by the line of light (29) within the extent of the scan using an optical detector (32), thereby generating an image of the longitudinal side of the support bar (18), and
• determining the actual geometry of the supporting projections (20) based on the generated image of the longitudinal side of the support bar (18) using an evaluation device (33)
and
the determined actual geometry of the supporting projections (20) is compared with the defined desired geometry of the supporting projections (20) using a comparison device (34).

2. The method according to claim 1, **characterized in that** a line of laser light as the line of light (29) is projected onto the longitudinal side of the support bar (18).

3. The method according to one of the preceding claims, **characterized in that** the longitudinal side of the support bar (18) is scanned by the line of light (29) by
• moving the line of light (29) parallel to itself relative to the support bar (18) in the direction (23) of the height of the support bar (18) and/or
• projecting the line of light (29) from the light source (28) onto the longitudinal side of the support bar (18) at an angle which deviates from a right angle and is formed between a projection direction (30) and the direction (23) of the height of the support bar (18) and by moving the support bar (18) in the direction toward the light source (28) opposite the projection direction (30) or in the projection direction (30) away from the light source (28).

4. The method as claimed in one of the preceding claims, **characterized in that** the method is carried out in the interior of an enclosure (6) of the machine tool (1), preferably in the interior of an enclosure (6) provided with a machining device for cutting workpieces.

5. A method for determining an actual state of a workpiece support (17) of a machine tool (1) for cutting a plate-type workpiece, in particular a metal sheet (15), using a cutting beam,
• wherein the workpiece support (17) comprises a plurality of support bars (18) for supporting the workpiece, the longitudinal direction (21) of the bars running in the same direction and the bars being spaced apart from one another in a transverse direction
and
• wherein, in a desired state of the support bars (18),
- the support bars (18) are each provided with a plurality of supporting projections (20) which are adjacent to one another in a longitudinal direction (21) of the support bars (18), a projection gap (22) being formed between mutually adjacent supporting projections (20),
- the supporting projections (20) each protrude from a main body (24) of the support bar (18) toward a supporting side (25) of the support bar (18) in the direction (23) of a height of the support bar (18) transversely with respect to the longitudinal direction (21) of the support bar (18), wherein the supporting side (25) of the support bar (18) is designed for supporting the workpiece, and
- the supporting projections (20) each have a defined desired geometry, viewed from a longitudinal side of the support bar (18) running in the longitudinal direction (21) of the support bar (18), the geometry having a projection height (26) by which the supporting projections (18) extend along a defined support bar (18) height range associated with the supporting projections (20),
**characterized in that** the actual state of at least one of the support bars (18) of the workpiece support (17) is determined according to the method according to one of the preceding claims.

6. The method according to claim 5, **characterized in that** the actual state of each of the support bars (18) of the workpiece support (17) is determined according to the method according to one of claims 1 to 4,
• wherein the actual geometry of each of the supporting projections (20) on the support bars (18) is determined according to a light section method by,
- projecting a line of light (29) extending in the longitudinal direction (21) of the support bar (18) from a light source (28) onto the longitudinal side of each of the support bars (18) and using the line of light (29) to scan the longitudinal side of the support bar (18) over at least a part of the support bar (18) height range associated with the supporting projections (20) in the direction (23) of the height of the support bar (18),
- detecting, for each of the support bars (18), the longitudinal side of the support bar (18) scanned by the line of light (29) within the extent of the scan using an optical detector (32), thereby generating an image of the longitudinal side of the support bar (18), and
- determining, for each of the support bars (18), the actual geometry of the supporting projections (20) based on the generated image of the longitudinal side of the support bar (18) using an evaluation device (33)
and
• wherein, for each of the support bars (18), the determined actual geometry of the supporting projections (20) is compared with the defined desired geometry of the supporting projections (20) using a comparison device (34).

7. A method for cutting a plate-type workpiece, in particular a metal sheet (15), on a machine tool (1) for cutting workpieces using a cutting beam,
• wherein the workpiece is supported on a workpiece support (17) of the machine tool (1) when machining is done, the support comprising a plurality of support bars (18) for supporting the workpiece, the longitudinal direction (21) of the bars running in the same direction and the bars being spaced apart from one another in a transverse direction,
• wherein, in a desired state of the support bars (18),
- the support bars (18) are each provided with a plurality of supporting projections (20) which are adjacent to one another in a longitudinal direction (21) of the support bars (18), a projection gap (22) being formed between mutually adjacent supporting projections (20),
- the supporting projections (20) each protrude from a main body (24) of the support bar (18) toward a supporting side (25) of the support bar (18) in the direction (23) of a height of the support bar (18) transversely with respect to the longitudinal direction (21) of the support bar (18), wherein the supporting side (25) of the support bar (18) is designed for supporting the workpiece, and
- the supporting projections (20) each have a defined desired geometry, viewed from a longitudinal side of the support bar (18) running in the longitudinal direction (21) of the support bar (18), the geometry having a projection height (26) by which the supporting projections (20) extend along a defined support bar (18) height range associated with the supporting projections (20),
**characterized in that**
the actual geometry of the workpiece support (17) is determined according to the method according to claim 5 or claim 6,
a configuration of parts consisting of workpiece parts to be generated during the cutting of the workpiece is defined for the workpiece depending on the detected actual state of the workpiece support (17), and
the workpiece and the cutting beam directed onto the workpiece are moved relative to one another along a cutting path during the cutting of the workpiece, the course of the cutting path corresponding to the defined configuration of workpiece parts.

8. A device for determining an actual state of a support bar (18) for supporting a plate-type workpiece, in particular a metal sheet (15), in a machine tool (1) for cutting workpieces using a cutting beam, wherein in a desired state of the support bar (18)
• the support bar (18) is provided with a plurality of supporting projections (20) which are adjacent to one another in a longitudinal direction (21) of the support bar (18), a projection gap (22) being formed between mutually adjacent supporting projections (20),
• the supporting projections (20) protrude from a main body (24) of the support bar (18) toward a supporting side (25) of the support bar (18) in the direction (23) of a height of the support bar (18) transversely with respect to the longitudinal direction (21) of the support bar (18), wherein the supporting side (25) of the support bar (18) is designed for supporting the workpiece, and
• the supporting projections (20) have a defined desired geometry, viewed from a longitudinal side of the support bar (18) running in the longitudinal direction (21) of the support bar (18), the geometry having a projection height (26) by which the supporting projections (20) extend along a defined support bar (18) height range associated with the supporting projections (20),
**characterized in that**
the device is designed as a device for determining an actual geometry of the supporting projections (20) of the support bar (18) **in that** the device comprises a device (27) for carrying out a light section method and a comparison device (34),
• wherein the device (27) for carrying out a light section method comprises:
- a scanning device (31), which comprises a light source (28) from which a line of light (29) extending in the longitudinal direction (21) of the support bar (18) can be projected onto the longitudinal side of the support bar (18) and which can be used to scan the longitudinal side of the support bar (18) with the line of light (29) over at least part of the support bar (18) height range associated with the supporting projections (20) in the direction (23) of the height of the support bar (18),
- an optical detector (32) by which to detect the longitudinal side of the support bar (18) scanned by the line of light (29) within the extent of the scan, thereby generating an image of the longitudinal side of the support bar (18), and
- an evaluation device (33) by which to determine the actual geometry of the supporting projections (20) based on the generated image of the longitudinal side of the support bar (18)
and
• wherein the determined actual geometry of the supporting projections (20) is compared with the defined desired geometry of the supporting projections (20) using the comparison device (34).

9. A device for determining an actual state of a workpiece support (17) of a machine tool (1) for cutting a plate-type workpiece, in particular a metal sheet (15), using a cutting beam,
• wherein the workpiece support (17) comprises a plurality of support bars (18) for supporting the workpiece, a longitudinal direction (21) of the bars running in the same direction and the bars being spaced apart from one another in a transverse direction and
• wherein, in a desired state of the support bars (18),
- the support bars (18) are each provided with a plurality of supporting projections (20) which are adjacent to one another in a longitudinal direction (21) of the support bars (18), a projection gap (22) being formed between mutually adjacent supporting projections (20),
- the supporting projections (20) each protrude from a main body (24) of the support bar (18) toward a supporting side (25) of the support bar (18) in the direction (23) of a height of the support bar (18) transversely with respect to the longitudinal direction (21) of the support bar (18), wherein the supporting side (25) of the support bar (18) is designed for supporting the workpiece, and
- the supporting projections (20) each have a defined desired geometry, each viewed from a longitudinal side of the support bar (18) running in the longitudinal direction (21) of the support bar (18), the geometry having a projection height (26) by which the supporting projections (20) extend along a defined support bar (18) height range associated with the supporting projections (20),
and
• the device, for at least one of the support bars (18), comprises a device for determining an actual state of the support bar (18),
**characterized in that,** for at least one of the support bars (18), the device according to claim 8 is provided as the device for determining an actual state of the support bar (18).

10. The device according to claim 9, **characterized in that** for the support bars (18) of the workpiece support (17), the device according to claim 8 is provided as a common device for determining an actual state of the support bars (18),
• wherein the device (27) for carrying out a light section method comprises:
- a scanning device (31) comprising a light source (28) from which a line of light (29) extending in the longitudinal direction (21) of the support bar (18) can be projected onto the longitudinal side of each of the support bars (18) and by means of which the longitudinal side of each of the support bars (18) can be scanned by the line of light (29) over at least a part of the support bar (18) height range associated with the supporting projections (20) in the direction (23) of the height of the support bar (18),
- an optical detector (32) by means of which, for each of the support bars (18), the longitudinal side of the support bar (18) scanned by the line of light (29) within the extent of the scan can be detected, thereby generating an image of the longitudinal side of the support bar (18), and
- an evaluation device (33) by means of which, for each of the support bars (18), the actual geometry of the supporting projections (20) can be determined based on the generated image of the longitudinal side of the support bar (18)
and
• wherein, for each of the support bars (18), the determined actual geometry of the supporting projections (20) can be compared with the defined desired geometry of the supporting projections (20) using the comparison device (34)

11. The device according to claim 10, **characterized in that** an advancing device is provided, by which the workpiece support (17) can be advanced in the transverse direction of the longitudinal sides of the support bars (18) to positions in which the longitudinal sides of the support bars (18) are accessible in succession for the device (27) for carrying out a light section method.

12. A machine tool for cutting a plate-type workpiece, in particular a metal sheet (15), using a cutting beam, the machine tool comprising
• a workpiece support (17) having a plurality of support bars (18) for supporting the workpiece, the longitudinal direction (21) of the bars running in the same direction and the bars being spaced apart from one another in a transverse direction, wherein, in a desired state of the support bars (18),
- the support bars (18) are each provided with a plurality of supporting projections (20) which are adjacent to one another in a longitudinal direction (21) of the support bars (18), a projection gap (22) being formed between mutually adjacent supporting projections (20),
- the supporting projections (20) each protrude from a main body (24) of the support bar (18) toward a supporting side (25) of the support bar (18) in the direction (23) of a height of the support bar (18) transversely with respect to the longitudinal direction (21) of the support bar (18), wherein the supporting side (25) of the support bar (18) is designed for supporting the workpiece, and
- the supporting projections (20) each have a defined desired geometry, viewed from a longitudinal side of the support bar (18) running in the longitudinal direction (21) of the support bar (18), the geometry having a projection height (26) by which the supporting projections (20) extend along a defined support bar (18) height range associated with the supporting projections (20),
• a machining device for cutting workpieces, the device generating a cutting beam by which to cut the workpiece, and
• a device for determining an actual state of the workpiece support (17),
**characterized in that** the device according to one of claims 9 to 11 is provided as the device for determining an actual state of the workpiece support (17).

13. The machine tool according to claim 12, **characterized in that**
• for cutting workpieces, a work space (5) provided with an enclosure (6) is provided in which the machining device for cutting workpieces is arranged and
• the workpiece support (17) can be arranged in the interior of the enclosure (6) for determining an actual state of the workpiece support (17).

14. The machine tool according to claim 12 or claim 13, wherein the device according to claim 11 is provided as the device for determining an actual state of the workpiece support (17), **characterized in that**
• the machining device for cutting workpieces comprises a work area in which a work piece to be supported by the workpiece support (17) is accessible for the cutting beam of the machining device for cutting workpieces,
• a workpiece transferring device is provided, by which the workpiece support (17) can be advanced into the work area of the machining device for the purpose of moving the workpiece supported by the workpiece support (17), and
• the workpiece transferring device is provided as the advancing device of the device for determining an actual state of the workpiece support (17).

## Revendications

1. Procédé de détermination d'un état réel d'une barre d'appui (18) pour le support d'une pièce à usiner en forme de plaque, en particulier d'une tôle (15), sur une machine-outil (1) pour l'usinage par séparation de pièces à usiner au moyen d'un faisceau de séparation, par lequel, pour un état de consigne de la barre d'appui (18),
• la barre d'appui (18) est pourvue de plusieurs saillies d'appui (20) voisines les unes des autres dans une direction longitudinale (21) de la barre d'appui (18), un espace intermédiaire de saillie (22) étant formé entre des saillies d'appui (20) voisines les unes des autres,
• les saillies d'appui (20) dépassent d'un corps de base (24) de la barre d'appui (18) dans la direction (23) d'une hauteur de la barre d'appui (18), transversalement à la direction longitudinale (21) de la barre d'appui (18), vers un côté de support (25) de la barre d'appui (18), le côté positionnement (25) de la barre d'appui (18) étant conçu pour le positionnement de la pièce à usiner et
• les saillies d'appui (20) présentent, dans une vue sur un côté longitudinal de la barre d'appui (18) s'étendant dans la direction longitudinale (21) de la barre d'appui (18), une géométrie de consigne définie avec une hauteur de saillie (26) avec laquelle les saillies d'appui (20) s'étendent sur une zone de hauteur définie et associée aux saillies d'appui (20) de la barre d'appui (18),
**caractérisé en ce que**
sur la barre d'appui (18), on détermine une géométrie réelle des saillies d'appui (20) selon un procédé de coupe à la lumière
• une ligne lumineuse (29) s'étendant dans la direction longitudinale (21) de la barre d'appui (18) et étant projetée sur le côté longitudinal de la barre d'appui (18) à partir d'une source lumineuse (28), la ligne lumineuse (29) scannant le côté longitudinal de la barre d'appui (18) sur au moins une partie de la zone de hauteur de la barre d'appui (18) associée aux saillies d'appui (20) dans la direction (23) de la hauteur de la barre d'appui (18),
• le côté longitudinal de la barre d'appui (18) scanné par la ligne lumineuse (29) étant détecté dans le périmètre scanné au moyen d'un détecteur optique (32) en produisant une image du côté longitudinal de la barre d'appui (18) et
• la géométrie réelle des saillies d'appui (20) étant à l'aide de l'image produite du côté longitudinal de la barre d'appui (18), déterminée au moyen d'un dispositif d'évaluation (33)
et
**en ce que** la géométrie réelle des saillies d'appui (20) déterminée est comparée au moyen d'un dispositif de comparaison (34) à la géométrie de consigne des saillies d'appui (20) définie.

2. Procédé selon les revendications 1, **caractérisé en ce qu'**une ligne de lumière laser est projetée comme ligne lumineuse (29) sur le côté longitudinal de la barre d'appui (18).

3. Procédé selon l'une des revendications précédentes, **caractérisé en ce que** le côté longitudinal de la barre d'appui (18) est scanné par la ligne lumineuse (29),
• la ligne lumineuse (29) étant déplacée parallèlement à elle-même par rapport à la barre d'appui (18) dans la direction (23) de la hauteur de la barre d'appui (18) et/ou
• la ligne lumineuse (29) étant projetée à partir de la source lumineuse (28) sur le côté longitudinal de la barre d'appui (18) sous un angle différent d'un angle droit, lequel est formé entre une direction de projection (30) et la direction (23) de la hauteur de la barre d'appui (18) et la barre d'appui (18) étant déplacée dans la direction contraire à la direction de projection (30) en direction de la source lumineuse (28) ou dans la direction de projection (30) en s'éloignant de la source lumineuse (28).

4. Procédé selon l'une des revendications précédentes, **caractérisé en ce que** le procédé est mis en oeuvre à l'intérieur d'un logement (6) de la machine-outil (1), de préférence à l'intérieur d'un logement (6) muni d'un dispositif d'usinage pour l'usinage par séparation de pièces à usiner.

5. Procédé de détermination d'un état réel d'un support de pièce à usiner (17) d'une machine-outil (1) pour l'usinage par séparation d'une pièce à usiner en forme de plaque, en particulier d'une tôle (15), au moyen d'un faisceau de séparation,
• par lequel le support de pièce à usiner (17) comprend, pour le positionnement de la pièce à usiner, plusieurs barres d'appui (18) qui s'étendent dans la même direction qu'une direction longitudinale (21) et qui sont espacées les unes des autres dans une direction transversale
et
• par lequel, dans un état de consigne des barres d'appui (18),
- les barres d'appui (18) sont chacune pourvues de plusieurs saillies d'appui (20) qui sont voisines les unes des autres dans une direction longitudinale (21) des barres d'appui (18), un espace intermédiaire de saillie (22) étant formé entre des saillies d'appui (20) voisines les unes des autres,
- les saillies d'appui (20) dépassent chacune d'un corps de base (24) de la barre d'appui (18) dans la direction (23) d'une hauteur de la barre d'appui (18), transversalement à la direction longitudinale (21) de la barre d'appui (18), vers un côté positionnement (25) de la barre d'appui (18), le côté positionnement (25) de la barre d'appui (18) étant conçu pour le positionnement de la pièce à usiner et
- les saillies d'appui (20) présentent chacune, dans une vue sur un côté longitudinal de la barre d'appui (18) s'étendant dans la direction longitudinale (21) de la barre d'appui (18), une géométrie de consigne définie avec une hauteur de saillie (26) avec laquelle les saillies d'appui (20) s'étendent sur une zone de hauteur définie et associée aux saillies d'appui (20) de la barre d'appui (18),
**caractérisé en ce que** l'état réel d'au moins une des barres d'appui (18) du support de pièce à usiner (17) est déterminé selon le procédé selon l'une des revendications précédentes.

6. Procédé selon la revendication 5, **caractérisé en ce que** l'état réel de chacune des barres d'appui (18) du support de pièce à usiner (17) est déterminé selon le procédé selon l'une des revendications 1 à 4,
• par lequel la géométrie réelle de chacune des saillies d'appui (20) est déterminée sur les barres d'appui (18) selon un procédé de coupe à la lumière,
- une ligne lumineuse (29) s'étendant dans la direction longitudinale (21) de chacune des barres d'appui (18) et étant projetée sur le côté longitudinal de la barre d'appui (18) à partir d'une source lumineuse (28), la ligne lumineuse (29) scannant le côté longitudinal de la barre d'appui (18) sur au moins une partie de la zone de hauteur de la barre d'appui (18) associée aux saillies d'appui (20) dans la direction (23) de la hauteur de la barre d'appui (18),
- le côté longitudinal de la barre d'appui (18) scanné par la ligne lumineuse (29) étant, pour chacune des barres d'appui (18), détecté dans le périmètre scanné au moyen d'un détecteur optique (32) en produisant une image du côté longitudinal de la barre d'appui (18) et
- la géométrie réelle des saillies d'appui (20) étant déterminée pour chacune des barres d'appui (18) à l'aide de l'image produite du côté longitudinal de la barre d'appui (18), au moyen d'un dispositif d'évaluation (33)
et
• par lequel, pour chacune des barres d'appui (18), la géométrie réelle des saillies d'appui (20) déterminée est comparée au moyen d'un dispositif de comparaison (34) à la géométrie de consigne des saillies d'appui (20) définie.

7. Procédé d'usinage par séparation d'une pièce à usiner en forme de plaque, en particulier d'une tôle (15), sur une machine-outil (1) pour l'usinage par séparation de pièces à usiner au moyen d'un faisceau de séparation,
• par lequel, pendant l'usinage, la pièce à usiner est positionnée sur un support de pièce à usiner (17) de la machine-outil (1) qui comprend, pour le positionnement de la pièce à usiner, plusieurs barres d'appui (18) qui s'étendent dans la même direction qu'une direction longitudinale (21) et qui sont espacées les unes des autres dans une direction transversale,
• par lequel, dans un état de consigne des barres d'appui (18),
- les barres d'appui (18) sont chacune pourvues de plusieurs saillies d'appui (20) qui sont voisines les unes des autres dans une direction longitudinale (21) des barres d'appui (18), un espace intermédiaire de saillie (22) étant formé entre des saillies d'appui (20) voisines les unes des autres,
- les saillies d'appui (20) dépassent chacune d'un corps de base (24) de la barre d'appui (18) dans la direction (23) d'une hauteur de la barre d'appui (18), transversalement à la direction longitudinale (21) de la barre d'appui (18), vers un côté positionnement (25) de la barre d'appui (18), le côté positionnement (25) de la barre d'appui (18) étant conçu pour le positionnement de la pièce à usiner et
- les saillies d'appui (20) présentent chacune, dans une vue sur un côté longitudinal de la barre d'appui (18) s'étendant dans la direction longitudinale (21) de la barre d'appui (18), une géométrie de consigne définie avec une hauteur de saillie (26) avec laquelle les saillies d'appui (20) s'étendent sur une zone de hauteur définie et associée aux saillies d'appui (20) de la barre d'appui (18),
**caractérisé en ce que**
l'état réel du support de pièce à usiner (17) est déterminé selon le procédé selon la revendication 5 ou la revendication 6,
une distribution des éléments est définie pour la pièce à usiner, en fonction de l'état réel détecté du support de pièce à usiner (17) avec des éléments de pièce à usiner à produire lors de l'usinage de séparation de la pièce à usiner, et
la pièce à usiner et le faisceau de séparation dirigé sur la pièce à usiner sont déplacés l'un par rapport à l'autre, lors de l'usinage de séparation de la pièce à usiner, le long d'un faisceau de séparation dont le tracé correspond à la distribution des éléments définie de la pièce à usiner.

8. Dispositif de détermination d'un état réel d'une barre d'appui (18) pour le support d'une pièce à usiner en forme de plaque, en particulier d'une tôle (15), sur une machine-outil (1) pour l'usinage par séparation de pièces à usiner au moyen d'un faisceau de séparation, par lequel, pour un état de consigne de la barre d'appui (18),
• la barre d'appui (18) est pourvue de plusieurs saillies d'appui (20) voisines les unes des autres dans une direction longitudinale (21) de la barre d'appui (18), un espace intermédiaire de saillie (22) étant formé entre des saillies d'appui (20) voisines les unes des autres,
• les saillies d'appui (20) dépassent d'un corps de base (24) de la barre d'appui (18) dans la direction (23) d'une hauteur de la barre d'appui (18), transversalement à la direction longitudinale (21) de la barre d'appui (18), vers un côté de support (25) de la barre d'appui (18), le côté positionnement (25) de la barre d'appui (18) étant conçu pour le positionnement de la pièce à usiner et
• les saillies d'appui (20) présentent, dans une vue sur un côté longitudinal de la barre d'appui (18) s'étendant dans la direction longitudinale (21) de la barre d'appui (18), une géométrie de consigne définie avec une hauteur de saillie (26) avec laquelle les saillies d'appui (20) s'étendent sur une zone de hauteur définie et associée aux saillies d'appui (20) de la barre d'appui (18),
**caractérisé en ce que**
le dispositif est conçu comme un dispositif de détermination d'une géométrie réelle des saillies d'appui (20) de la barre d'appui (18), le dispositif comprenant un dispositif (27) destiné à exécuter un procédé de coupe à la lumière ainsi qu'un dispositif de comparaison (34),
• par lequel, pour l'exécution d'un procédé de coupe à la lumière, le dispositif (27) présente :
- un dispositif de scannage (31) comprenant une source lumineuse (28) à partir de laquelle une ligne lumineuse (29) s'étendant dans la direction longitudinale (21) de la barre d'appui (18) peut être projetée sur le côté longitudinal de la barre d'appui (18) et au moyen de laquelle le côté longitudinal de la barre d'appui (18) peut être scanné avec la ligne lumineuse (29) sur au moins une partie de la zone de hauteur de la barre d'appui (18) associée aux saillies d'appui (20) dans la direction (23) de la hauteur de la barre d'appui (18),
- un détecteur optique (32), au moyen duquel le côté longitudinal de la barre d'appui (18) scanné par la ligne lumineuse (29) peut être détecté dans le périmètre scanné en produisant une image du côté longitudinal de la barre d'appui (18), ainsi que
- un dispositif d'évaluation (33), au moyen duquel la géométrie réelle des saillies d'appui (20) peut être déterminée à l'aide de l'image produite du côté longitudinal de la barre d'appui (18)
et
• par lequel, au moyen du dispositif de comparaison (34), la géométrie réelle déterminée des saillies d'appui (20) peut être comparée à la géométrie de consigne définie des saillies d'appui (20).

9. Dispositif de détermination d'un état réel d'un support de pièce à usiner (17) d'une machine-outil (1) pour l'usinage par séparation d'une pièce à usiner en forme de plaque, en particulier d'une tôle (15), au moyen d'un faisceau de séparation,
• par lequel le support de pièce à usiner (17) comprend, pour le positionnement de la pièce à usiner, plusieurs barres d'appui (18) qui s'étendent dans la même direction qu'une direction longitudinale (21) et qui sont espacées les unes des autres dans une direction transversale et
• par lequel, dans un état de consigne des barres d'appui (18),
- les barres d'appui (18) sont chacune pourvues de plusieurs saillies d'appui (20) qui sont voisines les unes des autres dans une direction longitudinale (21) des barres d'appui (18), un espace intermédiaire de saillie (22) étant formé entre des saillies d'appui (20) voisines les unes des autres,
- les saillies d'appui (20) dépassent chacune d'un corps de base (24) de la barre d'appui (18) dans la direction (23) d'une hauteur de la barre d'appui (18), transversalement à la direction longitudinale (21) de la barre d'appui (18), vers un côté positionnement (25) de la barre d'appui (18), le côté positionnement (25) de la barre d'appui (18) étant conçu pour le positionnement de la pièce à usiner et
- les saillies d'appui (20) présentent chacune, dans une vue sur un côté longitudinal de la barre d'appui (18) s'étendant dans la direction longitudinale (21) de la barre d'appui (18), une géométrie de consigne définie avec une hauteur de saillie (26) avec laquelle les saillies d'appui (20) s'étendent sur une zone de hauteur définie et associée aux saillies d'appui (20) de la barre d'appui (18)
et
• par lequel le dispositif présente, pour au moins une des barres d'appui (18), un dispositif de détermination d'un état réel de la barre d'appui (18),
**caractérisé en ce que,** pour au moins une des barres d'appui (18), le dispositif selon la revendication 8 est prévu comme dispositif de détermination d'un état réel de la barre d'appui (18).

10. Dispositif selon la revendication 9, **caractérisé en ce que** pour les barres d'appui (18) du support de pièce à usiner (17), le dispositif selon la revendication 8 est prévu comme dispositif commun de détermination d'un état réel des barres d'appui (18),
• par lequel, pour l'exécution d'un procédé de coupe à la lumière, le dispositif (27) présente :
- un dispositif de scannage (31) comprenant une source lumineuse (28) à partir de laquelle une ligne lumineuse (29) s'étendant dans la direction longitudinale (21) de chacune des barres d'appui (18) peut être projetée sur le côté longitudinal de la barre d'appui (18) et au moyen de laquelle le côté longitudinal de chacune des barres d'appui (18) peut être scanné avec la ligne lumineuse (29) sur au moins une partie de la zone de hauteur de la barre d'appui (18) associée aux saillies d'appui (20) dans la direction (23) de la hauteur de la barre d'appui (18),
- un détecteur optique (32), au moyen duquel, pour chacune des barres d'appui (18), le côté longitudinal de la barre d'appui (18) scanné par la ligne lumineuse (29) peut être détecté dans le périmètre scanné en produisant une image du côté longitudinal de la barre d'appui (18), ainsi que
- un dispositif d'évaluation (33), au moyen duquel, pour chacune des barres d'appui (18), la géométrie réelle des saillies d'appui (20) peut être déterminée à l'aide de l'image produite du côté longitudinal de la barre d'appui (18)
et
• par lequel, au moyen du dispositif de comparaison (34), la géométrie réelle déterminée des saillies d'appui (20) peut, pour chacune des barres d'appui (18), être comparée à la géométrie de consigne définie des saillies d'appui (20).

11. Dispositif selon la revendication 10, **caractérisé en ce qu'**il est prévu un dispositif d'avance au moyen duquel le support de pièce à usiner (17) peut être avancé dans la direction transversale des côtés longitudinaux des barres d'appui (18) dans des positions dans lesquelles les côtés longitudinaux des barres d'appui (18) sont accessibles successivement pour le dispositif (27) en vue de l'exécution d'un procédé de coupe à la lumière.

12. Machine-outil pour l'usinage par séparation d'une pièce en forme de plaque, en particulier d'une tôle (15), au moyen d'un faisceau de séparation,
• avec un support de pièce à usiner (17) comprenant, pour le positionnement de la pièce à usiner, plusieurs barres d'appui (18) qui s'étendent dans la même direction qu'une direction longitudinale (21) et qui sont espacées les unes des autres dans une direction transversale, dans laquelle, dans un état de consigne des barres d'appui (18)
- les barres d'appui (18) sont chacune pourvues de plusieurs saillies d'appui (20) qui sont voisines les unes des autres dans une direction longitudinale (21) des barres d'appui (18), un espace intermédiaire de saillie (22) étant formé entre des saillies d'appui (20) voisines les unes des autres,
- les saillies d'appui (20) dépassent chacune d'un corps de base (24) de la barre d'appui (18) dans la direction (23) d'une hauteur de la barre d'appui (18), transversalement à la direction longitudinale (21) de la barre d'appui (18), vers un côté positionnement (25) de la barre d'appui (18), le côté positionnement (25) de la barre d'appui (18) étant conçu pour le positionnement de la pièce à usiner et
- les saillies d'appui (20) présentent chacune, dans une vue sur un côté longitudinal de la barre d'appui (18) s'étendant dans la direction longitudinale (21) de la barre d'appui (18), une géométrie de consigne définie avec une hauteur de saillie (26) avec laquelle les saillies d'appui (20) s'étendent sur une zone de hauteur définie et associée aux saillies d'appui (20) de la barre d'appui (18),
• avec un dispositif d'usinage pour l'usinage par séparation de pièces à usiner, lequel produit un faisceau de séparation au moyen duquel la pièce à usiner peut être usinée par séparation ainsi que
• avec un dispositif de détermination d'un état réel du support de pièce à usiner (17),
**caractérisée en ce qu'**il est prévu comme dispositif de détermination d'un état réel du support de pièce à usiner (17) le dispositif selon l'une des revendications 9 à 11.

13. Machine-outil selon la revendication 12, **caractérisée en ce que**
• il est prévu un espace de travail (5) pourvu d'un logement (6), dans lequel est disposé le dispositif d'usinage pour l'usinage par séparation de pièces à usiner pendant l'usinage par séparation de pièces à usiner et
• **en ce que** le support de pièce à usiner (17) peut être disposé à l'intérieur du logement (6) pour la détermination d'un état réel du support de pièce à usiner (17).

14. Machine-outil selon la revendication 12 ou la revendication 13, dans laquelle le dispositif selon la revendication 11 est prévu comme dispositif de détermination d'un état réel du support de pièce à usiner (17), **caractérisé en ce que**
• le dispositif d'usinage pour l'usinage par séparation de pièces à usiner présente une zone de travail dans laquelle une pièce à usiner positionnée par le support de pièce à usiner (17) est accessible pour le faisceau de séparation du dispositif d'usinage pour l'usinage par séparation de pièces à usiner,
• un dispositif de transfert de pièce à usiner est prévu, au moyen duquel le support de pièce (17) peut être avancé dans la zone de travail du dispositif d'usinage pour déplacer la pièce positionnée par le support de pièce (17), et
• le dispositif de transfert de pièce à usiner est prévu comme dispositif d'avance du dispositif de détermination d'un état réel du support de pièce à usiner (17).
